# EUROPEAN PATENT SPECIFICATION

(11) **EP 3 640 881 B1**
(45) Date of publication and mention of the grant of the patent: **05.08.2026**
(21) Application number: 19194047.7
(22) Date of filing: 28.08.2019
(51) Int. Cl.: G06Q 30/06

(54) **ORDER PROMPTING METHOD, APPARATUS AND DEVICE**
AUFTRAGSAUFFORDERUNGSVERFAHREN, EINRICHTUNG UND VORRICHTUNG
PROCÉDÉ, APPAREIL ET DISPOSITIF D'INCITATION À L'ORDRE

(30) Priority: 19.10.2018 CN 201811224764
(43) Date of publication of application: 22.04.2020
(73) Proprietor: Beijing Xiaomi Mobile Software Co., Ltd., Beijing 100085 (CN)
(72) Inventor: SUN, Yongli, Beijing, 100085 (CN)
(74) Representative: Dehns Germany Partnerschaft mbB

(56) References cited:
- US-A1- 2016 196 594
- US-B1- 6 321 211

## Description

### TECHNICAL FIELD

The present invention relates to the field of Internet technology, and more particularly to an order prompting method, apparatus and device.

### BACKGROUND

In recent years, with the rapid development of Internet technology, Internet has become one of the indispensable tools in people's daily life, and network services are becoming more and more abundant, among which online shopping service is a relatively common service. Online shopping refers to when a user uses a terminal to retrieve information of merchandise through the Internet and place an order to the server, in which the operation of placing an order may be understood as initiating a purchasing request for the merchandise in the order. The order generally includes recipient information, so as to facilitate an online shopping service provider to distribute the merchandise in the order according to the recipient information.

Through the online shopping service, the user may purchase merchandise not only for the user but also for a third party. When the user purchases the merchandise for the third party through the online shopping, it is sometimes difficult for the third party to learn that the user has purchased the merchandise for the third party, which may cause inconvenience, for example, the third party may refuse the order because the third party does not know that the user has purchased the merchandise for the third party, thereby degrading user experience.

US2016196594A1 relates to a method for facilitating on-line gifting, including: receiving an identification of a first item to be purchased, entering the first item into an electronic shopping cart facilitating an on-line transaction, providing a method of payment for a value of the first item to the shopping cart, and sending the value of the first item and a description of the item to a recipient with at least the following electronic options from which the recipient may choose: accepting the first item with payment made and modifying the transaction in accordance with the value of the first item.

US6321211B1 discloses a method for electronically exchanging an online gift prior to shipping the online gift from a vendor of the online gift, including: generating a notification related to the online gift, the notification identifying a recipient for the online gift; retrieving order information related to the online gift; displaying the order information to the recipient; determining whether the recipient wants to exchange the online gift for a replacement gift; if the recipient selects to exchange the online gift for the replacement gift, selecting the replacement gift from a plurality of alternative gift items; and placing an electronic order for the replacement gift prior to physically receiving the online gift.

### SUMMARY

The present invention is defined by the appended claims.

According to a first aspect of the present invention, there is provided an order prompting method as defined by claim 1.

In some embodiments, the order prompting method further includes: transmitting an order prompt sharing request message to a terminal logging in to the account placing the order, to instruct the terminal logging in to the account placing the order to prompt its user to input a prompt confirmation instruction, after it is determined that the account information of the account placing the order and the recipient information correspond to different accounts and prior to transmitting the order-placed prompt instruction. Transmitting the order-placed prompt instruction includes: receiving the prompt confirmation instruction, and transmitting the order-placed prompt instruction in response to the prompt confirmation instruction.

In some embodiments, the account information of the account placing the order includes a communication mode of a user placing the order, and the recipient information includes a communication mode of a recipient of the order.

In some embodiments, the account information of the account placing the order includes an address of a user placing the order, and the recipient information includes an address of a recipient of the order.

In some embodiments, the account information of the account placing the order includes a payment account of a user placing the order, and the recipient information includes a payment account of a recipient of the order.

According to a second aspect of embodiments of the present invention, there is provided an order prompting apparatus as defined by claim 6.

In some embodiments, the order prompting apparatus further includes: a first request message transmitting unit, configured to transmit an order prompt sharing request message to a terminal logging in to the account placing the order, to instruct the terminal logging in to the account placing the order to prompt its user to input a prompt confirmation instruction. The prompt instruction transmitting unit includes: a first prompt instruction transmitting subunit, configured to receive the prompt confirmation instruction and transmit the order-placed prompt instruction in response to the prompt confirmation instruction.

In some embodiments, the account information of the account placing the order includes a communication mode of a user placing the order, and the recipient information includes a communication mode of a recipient of the order; and/or
the account information of the account placing the order includes an address of a user placing the order, and the recipient information includes an address of a recipient of the order; and/or
the account information of the account placing the order includes a payment account of a user placing the order, and the recipient information includes a payment account of a recipient of the order.

According to a further aspect of embodiments of the present invention, there is provided a non-transitory computer-readable storage medium having stored therein instructions that, when executed by a processor of a device, cause the device to perform an order prompting method, including: acquiring account information of an account placing an order and recipient information of the order when the order is placed; determining a recipient account corresponding to the recipient information when it is determined that the account information of the account placing the order and the recipient information correspond to different accounts; and transmitting an order-placed prompt instruction for instructing a terminal logging in to the recipient account to prompt that the order has been placed.

It is to be understood that both the foregoing general description and the following detailed description are exemplary and explanatory only and are not restrictive of the present invention, as claimed.

### BRIEF DESCRIPTION OF THE DRAWINGS

The accompanying drawings, which are incorporated in and constitute a part of this specification, illustrate embodiments consistent with the present invention and, together with the description, serve to explain the principles of the present invention.
Fig. 1 is a schematic diagram illustrating an application scenario of an order prompting method according to an embodiment.
Fig. 2a is a flow chart illustrating an order prompting method according to an embodiment.
Fig. 2b is a flow chart illustrating an order prompting method according to an embodiment.
Fig. 2c is a flow chart illustrating an order prompting method according to an embodiment.
Fig. 2d is a flow chart illustrating an order prompting method according to an embodiment.
Fig. 3a is a block diagram illustrating an order prompting apparatus according to an embodiment.
Fig. 3b is a block diagram illustrating an order prompting apparatus according to an embodiment.
Fig. 3c is a block diagram illustrating an order prompting apparatus according to an embodiment.
Fig. 3d is a block diagram illustrating an order prompting apparatus according to an embodiment.
Fig. 4 is a block diagram illustrating a device according to an embodiment.
Fig. 5 is a block diagram illustrating a device according to an embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present invention. Instead, they are merely examples of apparatuses and methods consistent with aspects related to the present invention as recited in the appended claims.

The terminology used in the present invention is for the purpose of describing exemplary examples only and is not intended to limit the present invention. As used in the present invention and the appended claims, the singular forms "a," "an" and "the" are intended to include the plural forms as well, unless the context clearly indicates otherwise. It shall also be understood that the terms "or" and "and/or" used herein are intended to signify and include any or all possible combinations of one or more of the associated listed items, unless the context clearly indicates otherwise.

It shall be understood that, although the terms "first," "second," "third," etc. may be used herein to describe various information, the information should not be limited by these terms. These terms are only used to distinguish one category of information from another. For example, without departing from the scope of the invention as defined by the claims, first information may also be referred to as second information; and similarly, second information may also be referred to as first information.

Reference throughout this specification to "an embodiment," "some embodiments," "one embodiment", "another example," "an example," "a specific example," or "some examples," means that a particular feature, structure, material, or characteristic described in connection with the embodiment or example is included in at least one embodiment or example of the present invention. Thus, the appearances of the phrases such as "in some embodiments," "in one embodiment", "in an embodiment", "in another example," "in an example," "in a specific example," or "in some examples," in various places throughout this specification are not necessarily referring to the same embodiment or example of the present invention. Furthermore, the particular features, structures, materials, or characteristics may be combined in any suitable manner in one or more embodiments or examples.

In order to solve the problem described in the Background, embodiments of the present invention provide an order prompting method, apparatus and device. With the order prompting method, apparatus and device, when an order is placed with, e.g., an online shopping service, information of an account placing the order, referred to herein as the order placing account, and recipient information of the order are acquired. When the order placing account information and the recipient information are determined to correspond to different accounts, for example, the order is placed by a user corresponding to the order placing account for a user corresponding to the recipient information, a recipient account corresponding to the recipient information is determined. The user corresponding to the recipient information is also referred to herein as a third party, and the recipient account is also referred to herein as a third-party account. An order-placed prompt instruction is further transmitted for instructing a terminal logging in to the recipient account (i.e., a terminal logging in to the third-party account) to prompt that the order has been placed. Accordingly, the terminal logging in to the third-party account is able to prompt the third party that someone (i.e., the user corresponding to the order placing account) has placed an order for the third party. In this way, when a user places an order for a third party, the third party may learn that the user has placed the order for the third party, thereby avoiding inconvenience and improving user experience, such as avoiding the third party to refuse the order because the third party does not know the user has placed the order for the third party.

The present invention provides an order prompting method, including: acquiring account information of an account placing an order and recipient information of an order when the order is placed; determining a recipient account corresponding to the recipient information when it is determined that the account information of the account placing the order and the recipient information correspond to different accounts; and transmitting an order-placed prompt instruction for instructing a terminal logging in to the recipient account to prompt that the order has been placed.

In an embodiment, the order prompting method further includes: transmitting an order prompt sharing request message to a terminal logging in to the account placing the order, to instruct the terminal logging in to the account placing the order to prompt its user to input a prompt confirmation instruction, after it is determined that the account information of the account placing the order and the recipient information correspond to different accounts and prior to transmitting the order-placed prompt instruction. Transmitting the order-placed prompt instruction includes: receiving the prompt confirmation instruction, and transmitting the order-placed prompt instruction in response to the prompt confirmation instruction.

In an embodiment, the order prompting method further includes: acquiring order information of the order. Transmitting the order-placed prompt instruction includes: transmitting the order-placed prompt instruction and the order information. The order-placed prompt instruction is configured to instruct the terminal logging in to the recipient account to prompt that the order has been placed and to display the order information.

The order prompting method further includes: transmitting an order information selection request message to the terminal logging in to the account placing the order, to instruct the terminal logging in to the account placing the order to prompt its user to select the order information; and receiving an order information selection confirmation instruction and determining selected order information according to the order information selection confirmation instruction. Transmitting the order-placed prompt instruction and the order information includes: transmitting the order-placed prompt instruction and the selected order information. The order-placed prompt instruction is configured to instruct the terminal logging in to the recipient account to prompt that the order has been placed and to display the selection order information.

In an embodiment, the account information of the account placing the order includes a communication mode of a user placing the order, and the recipient information includes a communication mode of a recipient of the order.

In an embodiment, the account information of the account placing the order includes an address of a user placing the order, and the recipient information includes an address of a recipient of the order.

In an embodiment, the account information of the account placing the order includes a payment account of a user placing the order, and the recipient information includes a payment account of a recipient of the order.

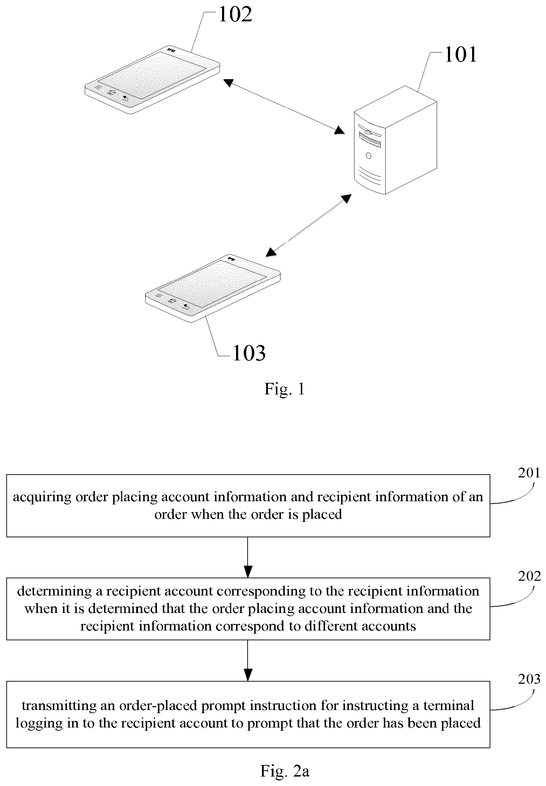

Fig. 1 is a schematic diagram illustrating an application scenario of the order prompting method according to an embodiment. The application scenario includes a server 101, an order placing terminal (i.e., a terminal logging in to an account placing an order, referred to herein as an order placing account) and a third-party terminal (i.e., a terminal logging in to a recipient account). Both the order placing terminal 102 and the third-party terminal 103 may be mobile phones, tablets, smart wearable devices, and other devices capable of interacting with the server 101, which are not limited by embodiments of the present invention. In embodiments of the present invention, the server 101 may be a device for providing computing services that is provided and used by an online shopping service operator. Alternatively, the server 101 may also be a device for providing computing services that is provided by a network operator and used by an online shopping service operator. The server 101 establishes data connections with the order placing terminal 102 and the third-party terminal 103 via wireless communication network, respectively.

Fig. 2a is a flow chart of an order prompting method according to an embodiment. The method may be applied to a server, and includes the following operations as illustrated at blocks shown in Fig. 2a.

At block 201, order placing account information and recipient information of an order are acquired when the order is placed.

In an embodiment, the order is placed when the server receives an order placing confirmation message transmitted by an order placing terminal. The order placing confirmation message may include an order number of the order. The server is able to perform further searching according to the order number so as to acquire the order placing account information and the recipient information of the order. In an embodiment, the order placing confirmation message may include the order number of the order, an identifier of merchandise in the order, the recipient information and the order placing account information of the order, and the server may directly extract the order placing account information and the recipient information of the order from the order placing confirmation message.

The order placing account information and the recipient information may include account information in the same format, and it may be determined by comparing the order placing account information and the recipient information that the order placing account and a recipient account corresponding to the recipient information are registered by different users.

For example, the order placing account information may include a communication mode of a user placing the order, and the recipient information may include a communication mode of a recipient of the order. Also for example, the order placing account information may include an address of a user placing the order, and the recipient information may include an address of a recipient of the order. As another example, the order placing account information may include a payment account of a user placing the order, and the recipient information may include a payment account of a recipient of the order.

At block 202, a recipient account corresponding to the recipient information is determined when the order placing account information and the recipient information are determined to correspond to different accounts.

In an embodiment, the order placing account information and the recipient information correspond to different accounts. For example, part or all of the order placing account information is registered by the order placing account, while part or all of the recipient information is registered by the recipient account, and the order placing account and the recipient account are different accounts.

In an embodiment, the recipient account corresponding to the recipient information may be determined by performing searches according to the part or all of the recipient information and determining the recipient account corresponding to the recipient information based on search results.

At block 203, an order-placed prompt instruction is transmitted for instructing a terminal logging in to the recipient account to prompt that the order has been placed.

In an embodiment, the order-placed prompt instruction may be transmitted to the terminal logging in to the recipient account in a point-to-point manner. As another example, the order-placed prompt instruction may be transmitted to the terminal logging in to the recipient account by broadcasting, and the terminal logging in to the recipient account will respond when receiving the broadcast order-placed prompt instruction, while a terminal not logging in to the recipient account will not respond when receiving the broadcast order-placed prompt instruction.

In an embodiment, the order-placed prompt instruction may be used to instruct the terminal logging in to the recipient account to display a prompt text or a prompt image in a corresponding online shopping application (APP) so as to prompt that the order in which the recipient is a user corresponding to the recipient account has been placed.

In the order prompting method according to embodiments of the present invention, when the order is placed, the order placing account information and the recipient information of the order are acquired; when the order placing account information and the recipient information are determined to correspond to different accounts, that is, the order is placed by a user corresponding to the order placing account for a user corresponding to the recipient information (i.e., a third party), the recipient account corresponding to the recipient information (i.e., a third-party account) is determined; and the order-placed prompt instruction is transmitted for instructing the terminal logging in to the recipient account (i.e., a terminal logging in to the third-party account) to prompt that the order has been placed. Accordingly, the terminal logging in to the third-party account is able to prompt the third party that someone (i.e., the user corresponding to the order placing account) has placed an order for the third party. In this way, when a user places an order for a third party, the third party may learn that the user has placed the order for the third party, thereby avoiding inconvenience and improving user experience, such as avoiding the third party to refuse the order because the third party does not know the user has placed the order for the third party.

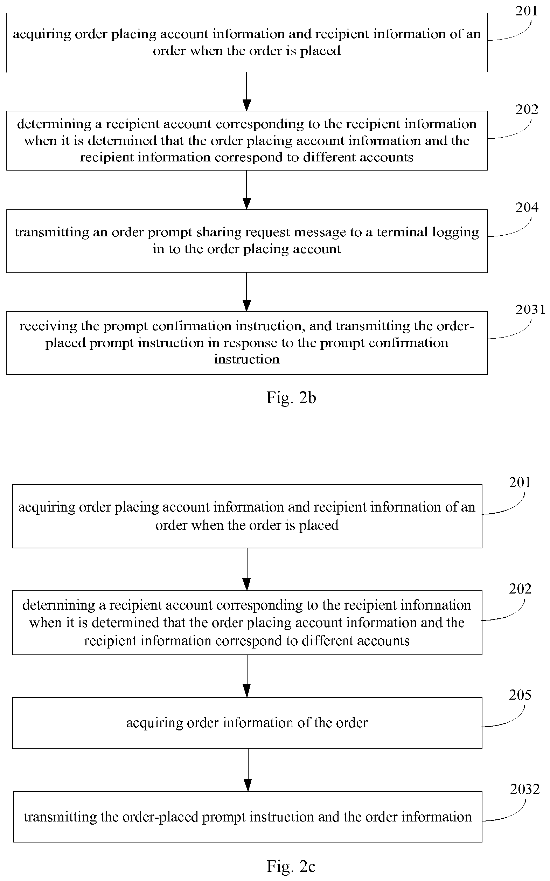

In an embodiment, as illustrated in Fig. 2b, after the operation as described at block 202 and before the operation as described at block 203, the order prompting method further includes an operation as illustrated at block 204.

At block 204, an order prompt sharing request message is transmitted to a terminal logging in to the order placing account.

In an embodiment, the order prompt sharing request message is configured to instruct the terminal logging in to the order placing account to prompt its user to input a prompt confirmation instruction.

In an embodiment, the operation that an order-placed prompt instruction is transmitted as described at block 203 may be implemented by an operation as illustrated at block 2031.

At block 2031, the prompt confirmation instruction is received, and the order-placed prompt instruction is transmitted in response to the prompt confirmation instruction.

In an embodiment, when receiving the order prompt sharing request message, the terminal logging in to the order placing account may display a shortcut option for sharing the order information to the recipient account in an order displaying interface of a corresponding application, and may further display corresponding prompt information to prompt the user to use the terminal logging in to the order placing account to share the order information to the recipient account or the terminal logging in to the recipient account. When the user corresponding to the order placing account clicks the shortcut option for sharing the order information to the recipient account, the terminal logging in to the order placing account may transmit the prompt confirmation instruction to the server. When receiving the prompt confirmation instruction, the server may mark the order as an order to be shared to the recipient account, and transmit the order-placed prompt instruction to the terminal logging in to the recipient account. When receiving the order-placed prompt instruction, the terminal logging in to the recipient account may display the corresponding prompt information so as to prompt the user corresponding to the recipient account that someone has purchased merchandize for the user, and the user corresponding to the recipient account may log in to the corresponding application using the recipient account to check the order.

By transmitting the order prompt sharing request message to make the terminal logging in to the order placing account prompt its user to input the prompt confirmation instruction in response to the order prompt sharing request message; receiving the prompt confirmation instruction; and transmitting the order-placed prompt instruction in response to the prompt confirmation instruction, it is ensured that only with the permission of the user corresponding to the order placing account can the terminal logging in to the recipient account prompt that the order has been placed, thereby avoiding a false prompt of the terminal logging in to the recipient account when the user corresponding to the order placing account does not want to prompt the user corresponding to the recipient account that the order has been placed for the user corresponding to the recipient account.

In an embodiment, as illustrated in Fig. 2c, the order prompting method further includes an operation as illustrated at block 205.

At block 205, order information of the order is acquired.

In an embodiment of the present invention, the operation that an order-placed prompt instruction is transmitted as described at block 203 may be implemented by an operation as illustrated at block 2032.

At block 2032, the order-placed prompt instruction and the order information are transmitted.

In an embodiment, the order-placed prompt instruction is configured to instruct the terminal logging in to the recipient account to prompt that the order has been placed and to display the order information.

In an embodiment, the order information may include at least one selected from the order number, text or picture information of merchandise in the order, a network link of the merchandise in the order, logistics information of the merchandise in the order, and the order placing account information of the order.

By acquiring the order information of the order and transmitting the order-placed prompt instruction and the order information to make the terminal logging in to the recipient account prompt that the order has been placed in response to the order-placed prompt instruction and display the order information, it is ensured that when a user places an order for a third party, the third party not only may learn that the user has placed the order for the third party, but also may learn details of the order, which is convenient for the third party to further learn the merchandise in the order or to receive the merchandise in the order, thereby improving user experience.

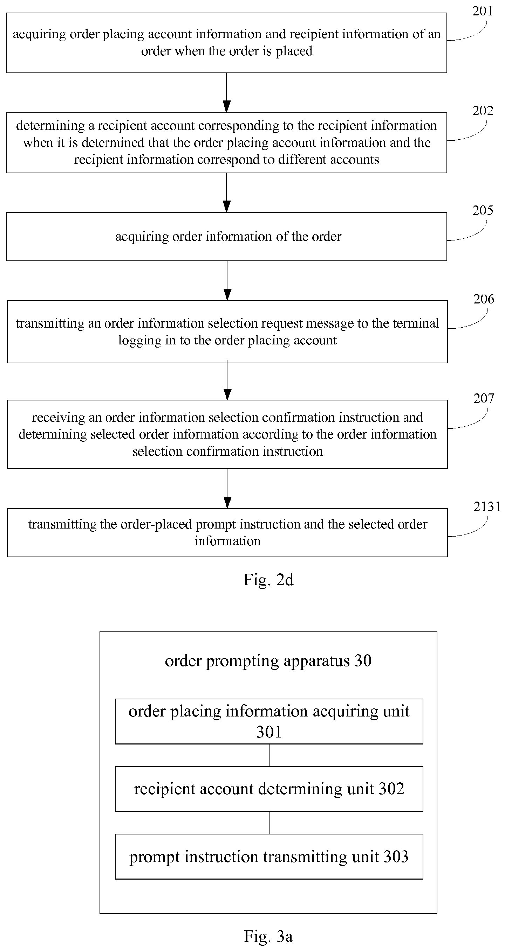

As illustrated in Fig. 2d, the order prompting method further includes operations as illustrated at blocks 206 to 207.

At block 206, an order information selection request message is transmitted to the terminal logging in to the order placing account.

The order information selection request message is configured to instruct the terminal logging in to the order placing account to prompt its user to select the order information.

At block 207, an order information selection confirmation instruction is received, and selected order information is determined according to the order information selection confirmation instruction.

In an embodiment of the present invention, the operation that the order-placed prompt instruction and the order information are transmitted as described at block 2032 may be implemented by an operation as illustrated at block 2131.

At block 2131, the order-placed prompt instruction and the selected order information are transmitted. The order-placed prompt instruction is configured to instruct the terminal logging in to the recipient account to prompt that the order has been placed and to display the selected order information.

By transmitting the order information selection request message to make the terminal logging in to the order placing account select the order information in response to the order information selection confirmation instruction; receiving the order information selection confirmation instruction; determining the selected order information according to the order information selection confirmation instruction; and transmitting the order-placed prompt instruction and the selected order information to instruct the terminal logging in to the recipient account to prompt that the order has been placed and display the selected order information in response to the order-placed prompt instruction, it is convenient for the user corresponding to the order placing account to select the order information to be displayed to the user corresponding to the recipient account, thus avoiding the display of information that the user corresponding to the order placing account does not want to provide to the user corresponding to the recipient account, thereby protecting the privacy of the user corresponding to the order placing account, and improving user experience.

In the following, an order prompting apparatus will be illustrated with reference to embodiments of the present invention, which may be used to implement the order prompting method as described above.

Fig. 3a is a block diagram illustrating an order prompting apparatus 30 according to an embodiment. The order prompting apparatus 30 may be a server or a part of the server. The order prompting apparatus 30 may be implemented as a part or the whole of an electronic device by software, hardware, or a combination thereof. As illustrated in Fig. 3a, the order prompting apparatus 30 includes: an order placing information acquiring unit 301, a recipient account determining unit 302, and a prompt instruction transmitting unit 303.

The order placing information acquiring unit 301 is configured to acquire order placing account information and recipient information of an order when the order is placed.

The recipient account determining unit 302 is configured to determine a recipient account corresponding to the recipient information when it is determined that the order placing account information and the recipient information correspond to different accounts.

The prompt instruction transmitting unit 303 is configured to transmit an order-placed prompt instruction for instructing a terminal logging in to the recipient account to prompt that the order has been placed.

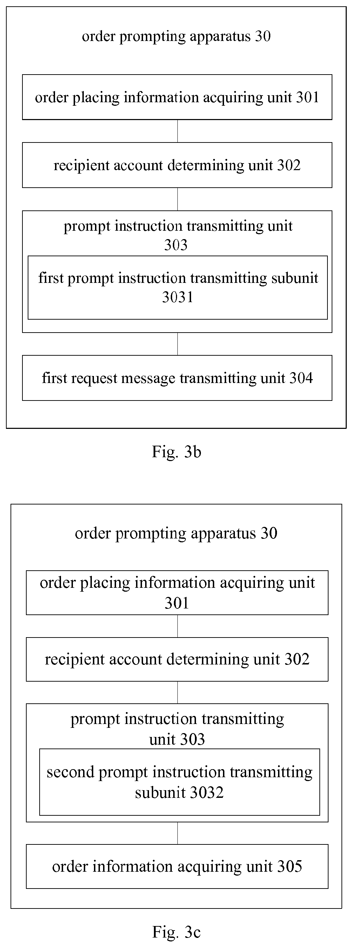

In an embodiment, as illustrated in Fig. 3b, the order prompting apparatus 30 further includes: a first request message transmitting unit 304 configured to transmit an order prompt sharing request message to a terminal logging in to the order placing account for instructing the terminal logging in to the order placing account to prompt its user to input a prompt confirmation instruction.

In an embodiment, the prompt instruction transmitting unit 303 includes a first prompt instruction transmitting subunit 3031 configured to receive the prompt confirmation instruction and transmit the order-placed prompt instruction in response to the prompt confirmation instruction.

In an embodiment, as illustrated in Fig. 3c, the order prompting apparatus 30 further includes an order information acquiring unit 305 configured to acquire order information of the order.

In an embodiment, the prompt instruction transmitting unit 303 includes a second prompt instruction transmitting subunit 3032 configured to transmit the order-placed prompt instruction and the order information. The order-placed prompt instruction is configured to instruct the terminal logging in to the recipient account to prompt that the order has been placed and to display the order information.

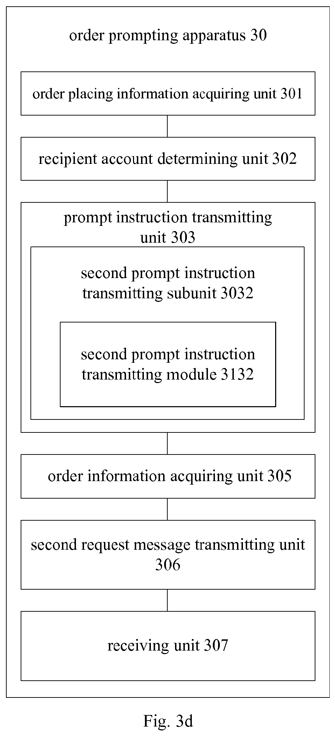

As illustrated in Fig. 3d, the order prompting apparatus 30 further includes a second request message transmitting unit 306 and a receiving unit 307.

The second request message transmitting unit 306 is configured to transmit an order information selection request message to the terminal logging in to the order placing account for instructing the terminal logging in to the order placing account to prompt its user to select the order information

The receiving unit 307 is configured to receive an order information selection confirmation instruction and determine selected order information according to the order information selection confirmation instruction.

The second prompt instruction transmitting subunit 3032 includes a second prompt instruction transmitting module 3132 configured to transmit the order-placed prompt instruction and the selected order information. The order-placed prompt instruction is configured to instruct the terminal logging in to the recipient account to prompt that the order has been placed and to display the selected order information.

In an embodiment, the order placing account information includes a communication mode of a user placing the order, and the recipient information includes a communication mode of a recipient of the order. In an embodiment, the order placing account information includes an address of a user placing the order, and the recipient information includes an address of a recipient of the order. In an embodiment, the order placing account information includes a payment account of a user placing the order, and the recipient information includes a payment account of a recipient of the order.

The order prompting apparatus according to embodiments of the present invention can acquire the order placing account information and the recipient information of the order when the order is placed; determine the recipient account corresponding to the recipient information (i.e., a third-party account) when it is determined that the order placing account information and the recipient information correspond to different accounts, for example, the order is placed by a user corresponding to the order placing account for a user corresponding to the recipient information (i.e., a third party); and transmit the order-placed prompt instruction for instructing the terminal logging in to the recipient account (i.e., a terminal logging in to the third-party account) to prompt that the order has been placed. Accordingly, the terminal logging in to the third-party account can prompt the third party that someone (i.e., the user corresponding to the order placing account) has placed an order for the third party. In this way, when a user places an order for a third party, the third party may learn that the user has placed the order for the third party, thereby avoiding inconvenience and improving user experience, such as avoiding the third party to refuse the order because the third party does not know the user has placed the order for the third party.

Embodiments of the present invention further provide an order prompting device, including: a processor; and a memory for storing instructions executable by the processor. The processor is configured to: acquire order placing account information and recipient information of an order when the order is placed; determine a recipient account corresponding to the recipient information when it is determined that the order placing account information and the recipient information correspond to different accounts; and transmit an order-placed prompt instruction for instructing a terminal logging in to the recipient account to prompt that the order has been placed.

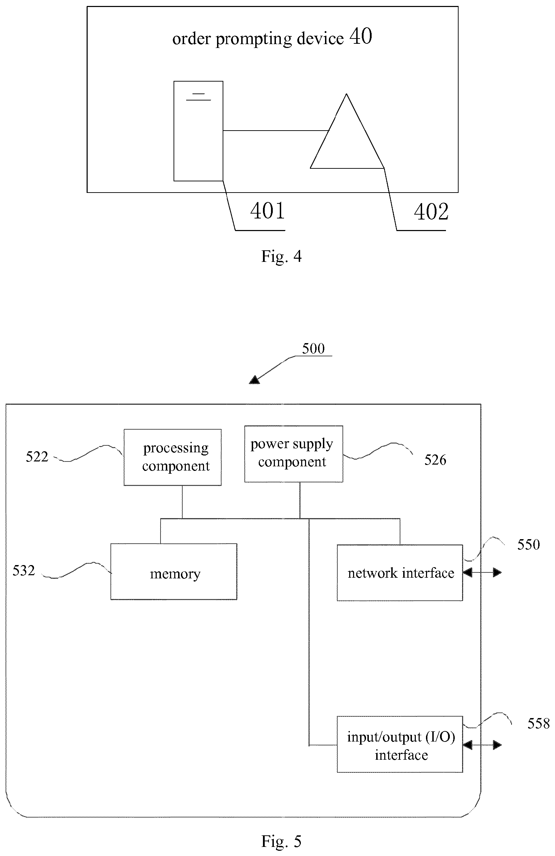

Fig. 4 is a block diagram illustrating an order prompting device 40 according to an embodiment of the present invention. The order prompting device 40 may be a server or a part of the server, and includes: a processor 401; and a memory 402 for storing instructions executable by the processor 401. The processor 401 is configured to: acquire order placing account information and recipient information of an order when the order is placed; determine a recipient account corresponding to the recipient information when it is determined that the order placing account information and the recipient information correspond to different accounts; and transmit an order-placed prompt instruction for instructing a terminal logging in to the recipient account to prompt that the order has been placed.

In an embodiment, the processor 401 may also be configured to transmit an order prompt sharing request message to a terminal logging in to the order placing account for instructing the terminal logging in to the order placing account to prompt its user to input a prompt confirmation instruction, after it is determined that the order placing account information and the recipient information correspond to different accounts and prior to transmitting the order-placed prompt instruction.

In an embodiment, the processor 401 is further configured to: receive the prompt confirmation instruction, and transmit the order-placed prompt instruction in response to the prompt confirmation instruction.

The processor 401 is configured to acquire order information of the order. The processor 401 is further configured to: transmit the order-placed prompt instruction and the order information. The order-placed prompt instruction is configured to instruct the terminal logging in to the recipient account to prompt that the order has been placed and to display the order information.

The processor 401 is configured to: transmit an order information selection request message to the terminal logging in to the order placing account for instructing the terminal logging in to the order placing account to prompt its user to select the order information; and receive an order information selection confirmation instruction and determine selected order information according to the order information selection confirmation instruction. The processor is further configured to: transmit the order-placed prompt instruction and the selected order information. The order-placed prompt instruction is configured to instruct the terminal logging in to the recipient account to prompt that the order has been placed and to display the selected order information.

In an embodiment, the order placing account information includes at least one of a communication mode, an address, or a payment account of a user placing the order; and the recipient information includes at least one of a communication mode, an address, or a payment account of a recipient of the order.

In an embodiment, the order placing account information includes the communication mode of the user placing the order, and the recipient information includes the communication mode of the recipient of the order. In an embodiment, the order placing account information includes the address of the user placing the order, and the recipient information includes the address of the recipient of the order. IN an embodiment, the order placing account information includes the payment account of the user placing the order, and the recipient information includes the payment account of the recipient of the order.

The order prompting device according to embodiments of the present invention can acquire the order placing account information and the recipient information of the order when the order is placed; determine the recipient account corresponding to the recipient information (i.e., a third party account) when it is determined that the order placing account information and the recipient information correspond to different accounts, that is, the order is an order placed by a user corresponding to the order placing account for a user corresponding to the recipient information (i.e., a third party); and transmit the order-placed prompt instruction for instructing the terminal logging in to the recipient account (i.e., a terminal logging in to the third-party account) to prompt that the order has been placed. Accordingly, the terminal logging in to the third-party account can prompt the third party that someone (i.e., the user corresponding to the order placing account) has placed an order for the third party. In this way, when a user places an order for a third party, the third party may learn that the user has placed the order for the third party, thereby avoiding inconvenience and improving user experience, such as avoiding the third party to refuse the order because the third party does not know the user has placed the order for the third party.

Embodiments of the present invention further provided a non-transitory computer-readable storage medium having stored therein computer instructions that, when executed by a processor, cause the processor to perform the order prompting method as described in any of embodiments in the first aspect of the present invention.

Fig. 5 is a block diagram illustrating an order prompting device 500 according to an embodiment. For example, the device 500 may be provided as a server. The device 500 includes a processing component 522, and memory resource represented by a memory 532 for storing instructions (such as application programs) executable by the processing component 522. The application programs stored in the memory 532 may include one or more modules, and each module may include a set of instructions. Further, the processing component 522 may be configured to execute the sets of instructions, so as to perform the methods described above.

The device 500 may also include a power supply component 526 configured to perform power management of the device 500, a wired or wireless network interfaces 550 configured to connect the device 500 to a network, and an input/output (I/O) interface 558. The device 500 may operate an operating system stored in the memory 532, such as Windows ServerTM, Mac OS XTM, UnixTM, LinuxTM, FreeBSDTM, or the like.

Embodiments of the present invention further provide a non-transitory computer-readable storage medium having stored therein instructions that, when executed by a processor of a device, cause the device to perform: acquiring order placing account information and recipient information of an order when the order is placed; determining a recipient account corresponding to the recipient information when it is determined that the order placing account information and the recipient information correspond to different accounts; and transmitting an order-placed prompt instruction for instructing a terminal logging in to the recipient account to prompt that the order has been placed.

In an embodiment, the instructions further cause the device to perform: transmitting an order prompt sharing request message to a terminal logging in to the order placing account for instructing the terminal logging in to the order placing account to prompt its user to input a prompt confirmation instruction, after it is determined that the order placing account information and the recipient information correspond to different accounts and prior to transmitting the order-placed prompt instruction. The instructions further cause the device to perform: receiving the prompt confirmation instruction, and transmitting the order-placed prompt instruction in response to the prompt confirmation instruction.

In an embodiment, the instructions further cause the device to perform: acquiring order information of the order. The instructions further cause the device to perform: transmitting the order-placed prompt instruction and the order information. The order-placed prompt instruction is configured to instruct the terminal logging in to the recipient account to prompt that the order has been placed and to display the order information.

In an embodiment, the instructions further cause the processor to perform: transmitting an order information selection request message to the terminal logging in to the order placing account for instructing the terminal logging in to the order placing account to prompt its user to select the order information; and receiving an order information selection confirmation instruction and determining selected order information according to the order information selection confirmation instruction. The instructions further cause the device to perform: transmitting the order-placed prompt instruction and the selected order information. The order-placed prompt instruction is configured to instruct the terminal logging in to the recipient account to prompt that the order has been placed and to display the selected order information.

In an embodiment, the order placing account information includes a communication mode of a user placing the order, and the recipient information includes a communication mode of a recipient of the order. In an embodiment, the order placing account information includes an address of a user placing the order, and the recipient information includes an address of a recipient of the order. In an embodiment, the order placing account information includes a payment account of a user placing the order, and the recipient information includes a payment account of a recipient of the order.

The present invention may include dedicated hardware implementations such as application specific integrated circuits, programmable logic arrays and other hardware devices. The hardware implementations can be constructed to implement one or more of the methods described herein. Applications that may include the apparatus and systems of various examples can broadly include a variety of electronic and computing systems. One or more examples described herein may implement functions using two or more specific interconnected hardware modules or devices with related control and data signals that can be communicated between and through the modules, or as portions of an application-specific integrated circuit. Accordingly, the system disclosed may encompass software, firmware, and hardware implementations. The terms "module" and "unit" may include memory (shared, dedicated, or group) that stores code or instructions that can be executed by one or more processors.

Other embodiments of the present invention will be apparent to those skilled in the art from consideration of the specification and practice of the present invention disclosed here. This application is intended to cover any variations, uses, or adaptations of the present invention following the general principles thereof and including such departures from the present invention as come within known or customary practice in the art. It is intended that the specification and examples be considered as exemplary only.

It will be appreciated that the present invention is not limited to the exact construction that has been described above and illustrated in the accompanying drawings, and that various modifications and changes can be made without departing from the scope of the invention as defined by the claims.

## Claims

1. An order prompting method, comprising:
acquiring (201), at a server, from a first terminal, account information of an account placing an order and recipient information of the order, when the order is placed by the first terminal;
determining (202), at the server, a recipient account corresponding to the recipient information when it is determined that the account information of the account placing the order and the recipient information correspond to different accounts;
acquiring (205), at the server, order information of the order from the first terminal,
**characterized in that** the method further comprises:
transmitting (206), at the server, an order information selection request message to the first terminal logging in to the account placing the order, to instruct the first terminal logging in to the account placing the order to prompt its user to select the order information;
receiving (207), at the server, from the first terminal, an order information selection confirmation instruction and determining selected order information according to the order information selection confirmation instruction, and
transmitting (2032), at the server, to a second terminal, an order-placed prompt instruction and the selected order information, wherein the order-placed prompt instruction is configured to instruct the second terminal logging in to the recipient account to prompt that the order has been placed and to display the selected order information.

2. The order prompting method according to claim 1, further comprising:
transmitting (204), at the server, an order prompt sharing request message to the first terminal logging in to the account placing the order, to instruct the first terminal logging in to the account placing the order to prompt its user to input a prompt confirmation instruction, after it is determined at the server that the account information of the account placing the order and the recipient information correspond to different accounts and prior to transmitting the order-placed prompt instruction,
wherein transmitting the order-placed prompt instruction comprises:
receiving (2031), at the server, the prompt confirmation instruction from the first terminal, and transmitting, at the server, the order-placed prompt instruction to the second terminal in response to the prompt confirmation instruction.

3. The order prompting method according to claim 1 or 2, wherein the account information of the account placing the order comprises a communication mode of a user placing the order, and the recipient information comprises a communication mode of a recipient of the order.

4. The order prompting method according to any one of claims 1 to 3, wherein the account information of the account placing the order comprises an address of a user placing the order, and the recipient information comprises an address of a recipient of the order.

5. The order prompting method according to any one of claims 1 to 4, wherein the account information of the account placing the order comprises a payment account of a user placing the order, and the recipient information comprises a payment account of a recipient of the order.

6. An order prompting apparatus, comprising:
an order placing information acquiring unit (301), configured to acquire account information of an account placing an order and recipient information of the order, when the order is placed;
a recipient account determining unit (302), configured to determine a recipient account corresponding to the recipient information when it is determined that the account information of the account placing the order and the recipient information correspond to different accounts;
an order information acquiring unit (305), configured to acquire order information of the order,
**characterized in that** the order prompting apparatus further comprises:
a second request message transmitting unit (306), configured to transmit an order information selection request message to a first terminal logging in to the account placing the order, to instruct the first terminal logging in to the account placing the order to prompt its user to select the order information; and
a receiving unit (307), configured to receive an order information selection confirmation instruction and determining selected order information according to the order information selection confirmation instruction, and
a prompt instruction transmitting unit (303), configured to transmit an order-placed prompt instruction and the selected order information, wherein the order-placed prompt instruction is configured to instruct a second terminal logging in to the recipient account to prompt that the order has been placed and to display the selected order information.

7. The order prompting apparatus according to claim 6, further comprising:
a first request message transmitting unit (304), configured to transmit an order prompt sharing request message to the first terminal logging in to the account placing the order, to instruct the first terminal logging in to the account placing the order to prompt its user to input a prompt confirmation instruction,
wherein the prompt instruction transmitting unit (303) comprises:
a first prompt instruction transmitting subunit (3031), configured to receive the prompt confirmation instruction and transmit the order-placed prompt instruction in response to the prompt confirmation instruction.

8. The order prompting apparatus according to claim 6 or 7, wherein
the account information of the account placing the order comprises a communication mode of a user placing the order, and the recipient information comprises a communication mode of a recipient of the order; and/or
the account information of the account placing the order comprises an address of a user placing the order, and the recipient information comprises an address of a recipient of the order; and/or
the account information of the account placing the order comprises a payment account of a user placing the order, and the recipient information comprises a payment account of a recipient of the order.

9. A non-transitory computer-readable storage medium having stored therein computer instructions that, when executed by a processor of a device, cause the device to perform an order prompting method according to any one of claims 1 to 5.

## Patentansprüche

1. Bestellungsaufforderungsverfahren, umfassend:
Erfassen (201), an einem Server, von einem ersten Endgerät, von Kontoinformationen eines eine Bestellung aufgebenden Kontos und von Empfängerinformationen der Bestellung, wenn die Bestellung durch das erste Endgerät aufgegeben wird;
Bestimmen (202), an dem Server, eines Empfängerkontos, das den Empfängerinformationen entspricht, wenn festgestellt wird, dass die Kontoinformationen des die Bestellung aufgebenden Kontos und die Empfängerinformationen unterschiedlichen Konten entsprechen;
Erfassen (205), an dem Server, von Bestellinformationen der Bestellung von dem ersten Endgerät,
**dadurch gekennzeichnet, dass** das Verfahren ferner umfasst:
Senden (206), an dem Server, einer Bestellinformationsauswahl-Anforderungsnachricht an das erste Endgerät, das sich in dem die Bestellung aufgebenden Konto anmeldet, um das erste Endgerät, das sich in dem die Bestellung aufgebenden Konto anmeldet, anzuweisen, dessen Benutzer zur Auswahl der Bestellinformationen aufzufordern;
Empfangen (207), an dem Server, einer Bestellinformationsauswahl-Bestätigungsanweisung von dem ersten Endgerät und Bestimmen ausgewählter Bestellinformationen gemäß der Bestellinformationsauswahl-Bestätigungsanweisung, und
Senden (2032), an dem Server, einer Bestellung-aufgegeben-Aufforderungsanweisung und der ausgewählten Bestellinformationen an ein zweites Endgerät, wobei die Bestellung-aufgegeben-Aufforderungsanweisung dazu eingerichtet ist, das zweite Endgerät, das sich in dem Empfängerkonto anmeldet, anzuweisen, darauf hinzuweisen, dass die Bestellung aufgegeben wurde, und die ausgewählten Bestellinformationen anzuzeigen.

2. Bestellungsaufforderungsverfahren nach Anspruch 1, ferner umfassend:
Senden (204), an dem Server, einer Bestellaufforderungs-Teilungsanforderungsnachricht an das erste Endgerät, das sich in dem die Bestellung aufgebenden Konto anmeldet, um das erste Endgerät, das sich in dem die Bestellung aufgebenden Konto anmeldet, anzuweisen, dessen Benutzer zur Eingabe einer Aufforderungsbestätigungsanweisung aufzufordern, nachdem an dem Server festgestellt wurde, dass die Kontoinformationen des die Bestellung aufgebenden Kontos und die Empfängerinformationen unterschiedlichen Konten entsprechen und bevor die Bestellung-aufgegeben-Aufforderungsanweisung gesendet wird,
wobei das Senden der Bestellung-aufgegeben-Aufforderungsanweisung umfasst:
Empfangen (2031), an dem Server, der Aufforderungsbestätigungsanweisung von dem ersten Endgerät und Senden, an dem Server, der Bestellung-aufgegeben-Aufforderungsanweisung an das zweite Endgerät als Reaktion auf die Aufforderungsbestätigungsanweisung.

3. Bestellungsaufforderungsverfahren nach Anspruch 1 oder 2, wobei
die Kontoinformationen des die Bestellung aufgebenden Kontos eine Kommunikationsart eines die Bestellung aufgebenden Benutzers umfassen und die Empfängerinformationen eine Kommunikationsart eines Empfängers der Bestellung umfassen.

4. Bestellungsaufforderungsverfahren nach einem der Ansprüche 1 bis 3, wobei
die Kontoinformationen des die Bestellung aufgebenden Kontos eine Adresse eines die Bestellung aufgebenden Benutzers umfassen und die Empfängerinformationen eine Adresse eines Empfängers der Bestellung umfassen.

5. Bestellungsaufforderungsverfahren nach einem der Ansprüche 1 bis 4, wobei
die Kontoinformationen des die Bestellung aufgebenden Kontos ein Zahlungskonto eines die Bestellung aufgebenden Benutzers umfassen und die Empfängerinformationen ein Zahlungskonto eines Empfängers der Bestellung umfassen.

6. Bestellungsaufforderungsvorrichtung, umfassend:
eine Bestellungsaufgabeinformations-Erfassungseinheit (301), die dazu eingerichtet ist, Kontoinformationen eines eine Bestellung aufgebenden Kontos und Empfängerinformationen der Bestellung zu erfassen, wenn die Bestellung aufgegeben wird;
eine Empfängerkonto-Bestimmungseinheit (302), die dazu eingerichtet ist, ein Empfängerkonto zu bestimmen, das den Empfängerinformationen entspricht, wenn festgestellt wird, dass die Kontoinformationen des die Bestellung aufgebenden Kontos und die Empfängerinformationen unterschiedlichen Konten entsprechen;
eine Bestellinformations-Erfassungseinheit (305), die dazu eingerichtet ist, Bestellinformationen der Bestellung zu erfassen,
**dadurch gekennzeichnet, dass** die Bestellungsaufforderungsvorrichtung ferner umfasst:
eine zweite Anforderungsnachrichten-Sendeeinheit (306), die dazu eingerichtet ist, eine Bestellinformationsauswahl-Anforderungsnachricht an ein erstes Endgerät zu senden, das sich in dem die Bestellung aufgebenden Konto anmeldet, um das erste Endgerät, das sich in dem die Bestellung aufgebenden Konto anmeldet, anzuweisen, dessen Benutzer zur Auswahl der Bestellinformationen aufzufordern; und
eine Empfangseinheit (307), die dazu eingerichtet ist, eine Bestellinformationsauswahl-Bestätigungsanweisung zu empfangen und ausgewählte Bestellinformationen gemäß der Bestellinformationsauswahl-Bestätigungsanweisung zu bestimmen, und
eine Aufforderungsanweisungs-Sendeeinheit (303), die dazu eingerichtet ist, eine Bestellung-aufgegeben-Aufforderungsanweisung und die ausgewählten Bestellinformationen zu senden, wobei die Bestellung-aufgegeben-Aufforderungsanweisung dazu eingerichtet ist, ein zweites Endgerät, das sich in dem Empfängerkonto anmeldet, anzuweisen, darauf hinzuweisen, dass die Bestellung aufgegeben wurde, und die ausgewählten Bestellinformationen anzuzeigen.

7. Bestellungsaufforderungsvorrichtung nach Anspruch 6, ferner umfassend:
eine erste Anforderungsnachrichten-Sendeeinheit (304), die dazu eingerichtet ist, eine Bestellaufforderungs-Teilungsanforderungsnachricht an das erste Endgerät zu senden, das sich in dem die Bestellung aufgebenden Konto anmeldet, um das erste Endgerät, das sich in dem die Bestellung aufgebenden Konto anmeldet, anzuweisen, dessen Benutzer zur Eingabe einer Aufforderungsbestätigungsanweisung aufzufordern,
wobei die Aufforderungsanweisungs-Sendeeinheit (303) umfasst:
eine erste Aufforderungsanweisungs-Sendeuntereinheit (3031), die dazu eingerichtet ist, die Aufforderungsbestätigungsanweisung zu empfangen und die Bestellung-aufgegeben-Aufforderungsanweisung als Reaktion auf die Aufforderungsbestätigungsanweisung zu senden.

8. Bestellungsaufforderungsvorrichtung nach Anspruch 6 oder 7, wobei
die Kontoinformationen des die Bestellung aufgebenden Kontos eine Kommunikationsart eines die Bestellung aufgebenden Benutzers umfassen und die Empfängerinformationen eine Kommunikationsart eines Empfängers der Bestellung umfassen; und/oder
die Kontoinformationen des die Bestellung aufgebenden Kontos eine Adresse eines die Bestellung aufgebenden Benutzers umfassen und die Empfängerinformationen eine Adresse eines Empfängers der Bestellung umfassen; und/oder
die Kontoinformationen des die Bestellung aufgebenden Kontos ein Zahlungskonto eines die Bestellung aufgebenden Benutzers umfassen und die Empfängerinformationen ein Zahlungskonto eines Empfängers der Bestellung umfassen.

9. Nichtflüchtiges computerlesbares Speichermedium, auf dem Computeranweisungen gespeichert sind, die bei Ausführung durch einen Prozessor einer Vorrichtung die Vorrichtung veranlassen, ein Bestellungsaufforderungsverfahren nach einem der Ansprüche 1 bis 5 durchzuführen.

## Revendications

1. Procédé d'incitation à une commande, comprenant :
l'acquisition (201), au niveau d'un serveur, à partir d'un premier terminal, d'informations de compte d'un compte passant une commande et d'informations de destinataire de la commande, lorsque la commande est passée par le premier terminal;
la détermination (202), au niveau du serveur, d'un compte destinataire correspondant aux informations de destinataire lorsqu'il est déterminé que les informations de compte du compte passant la commande et les informations de destinataire correspondent à des comptes différents ;
l'acquisition (205), au niveau du serveur, d'informations de commande de la commande à partir du premier terminal,
**caractérisé en ce que** le procédé comprend en outre :
la transmission (206), au niveau du serveur, d'un message de demande de sélection d'informations de commande au premier terminal connecté au compte passant la commande, pour inviter le premier terminal connecté au compte passant la commande à inciter son utilisateur à sélectionner les informations de commande ;
la réception (207), au niveau du serveur, à partir du premier terminal, d'une instruction de confirmation de sélection d'informations de commande et la détermination d'informations de commande sélectionnées selon l'instruction de confirmation de sélection d'informations de commande, et
la transmission (2032), au niveau du serveur, à un deuxième terminal, d'une instruction d'incitation à la commande passée et des informations de commande sélectionnées, ladite instruction d'incitation à la commande passée étant configurée pour inviter le deuxième terminal connecté au compte destinataire à indiquer que la commande a été passée et à afficher les informations de commande sélectionnées.

2. Procédé d'incitation à une commande selon la revendication 1, comprenant en outre :
la transmission (204), au niveau du serveur, d'un message de demande de partage d'incitation à la commande au premier terminal connecté au compte passant la commande, pour inviter le premier terminal connecté au compte passant la commande à inciter son utilisateur à saisir une instruction de confirmation d'incitation, après qu'il a été déterminé au niveau du serveur que les informations de compte du compte passant la commande et les informations de destinataire correspondent à des comptes différents et avant la transmission de l'instruction d'incitation à la commande passée,
dans lequel la transmission de l'instruction d'incitation à la commande passée comprend :
la réception (2031), au niveau du serveur, de l'instruction de confirmation d'incitation à partir du premier terminal, et la transmission, au niveau du serveur, de l'instruction d'incitation à la commande passée au deuxième terminal en réponse à l'instruction de confirmation d'incitation.

3. Procédé d'incitation à une commande selon la revendication 1 ou 2, dans lequel
les informations de compte du compte passant la commande comprennent un mode de communication d'un utilisateur passant la commande, et les informations de destinataire comprennent un mode de communication d'un destinataire de la commande.

4. Procédé d'incitation à une commande selon l'une quelconque des revendications 1 à 3, dans lequel
les informations de compte du compte passant la commande comprennent une adresse d'un utilisateur passant la commande, et les informations de destinataire comprennent une adresse d'un destinataire de la commande.

5. Procédé d'incitation à une commande selon l'une quelconque des revendications 1 à 4, dans lequel
les informations de compte du compte passant la commande comprennent un compte de paiement d'un utilisateur passant la commande, et les informations de destinataire comprennent un compte de paiement d'un destinataire de la commande.

6. Appareil d'incitation à une commande, comprenant :
une unité d'acquisition d'informations de passation de commande (301), configurée pour acquérir des informations de compte d'un compte passant une commande et des informations de destinataire de la commande, lorsque la commande est passée ;
une unité de détermination de compte destinataire (302), configurée pour déterminer un compte destinataire correspondant aux informations de destinataire lorsqu'il est déterminé que les informations de compte du compte passant la commande et les informations de destinataire correspondent à des comptes différents ;
une unité d'acquisition d'informations de commande (305), configurée pour acquérir des informations de commande de la commande,
**caractérisé en ce que** l'appareil d'incitation à une commande comprend en outre :
une unité de transmission de deuxième message de demande (306), configurée pour transmettre un message de demande de sélection d'informations de commande à un premier terminal connecté au compte passant la commande, pour inviter le premier terminal connecté au compte passant la commande à inciter son utilisateur à sélectionner les informations de commande ; et
une unité de réception (307), configurée pour recevoir une instruction de confirmation de sélection d'informations de commande et pour déterminer des informations de commande sélectionnées selon l'instruction de confirmation de sélection d'informations de commande, et
une unité de transmission d'instruction d'incitation (303), configurée pour transmettre une instruction d'incitation à la commande passée et les informations de commande sélectionnées, ladite instruction d'incitation à la commande passée étant configurée pour inviter un deuxième terminal connecté au compte destinataire à indiquer que la commande a été passée et à afficher les informations de commande sélectionnées.

7. Appareil d'incitation à une commande selon la revendication 6, comprenant en outre :
une unité de transmission de premier message de demande (304), configurée pour transmettre un message de demande de partage d'incitation à la commande au premier terminal connecté au compte passant la commande, pour inviter le premier terminal connecté au compte passant la commande à inciter son utilisateur à saisir une instruction de confirmation d'incitation,
dans lequel l'unité de transmission d'instruction d'incitation (303) comprend :
une première sous-unité de transmission d'instruction d'incitation (3031), configurée pour recevoir l'instruction de confirmation d'incitation et pour transmettre l'instruction d'incitation à la commande passée en réponse à l'instruction de confirmation d'incitation.

8. Appareil d'incitation à une commande selon la revendication 6 ou 7, dans lequel
les informations de compte du compte passant la commande comprennent un mode de communication d'un utilisateur passant la commande, et les informations de destinataire comprennent un mode de communication d'un destinataire de la commande ; et/ou
les informations de compte du compte passant la commande comprennent une adresse d'un utilisateur passant la commande, et les informations de destinataire comprennent une adresse d'un destinataire de la commande ; et/ou
les informations de compte du compte passant la commande comprennent un compte de paiement d'un utilisateur passant la commande, et les informations de destinataire comprennent un compte de paiement d'un destinataire de la commande.

9. Support de stockage non transitoire lisible par ordinateur sur lequel sont stockées des instructions informatiques qui, lorsqu'elles sont exécutées par un processeur d'un dispositif, amènent le dispositif à mettre en œuvre un procédé d'incitation à une commande selon l'une quelconque des revendications 1 à 5.
